# EUROPEAN PATENT APPLICATION

(11) **EP 4 704 290 A1**
(43) Date of publication of application: **04.03.2026**
(21) Application number: 24196898.1
(22) Date of filing: 28.08.2024
(51) Int. Cl.: H02J 7/00, H02J 50/12, H02J 50/80, H04B 5/79

(54) **WIRELESS POWER TRANSFER**

(71) Applicant: Koninklijke Philips N.V., 5656 AG Eindhoven (NL)
(72) Inventor: LULOFS, Klaas Jakob, 5656 AG Eindhoven (NL); DRAAK, Johannes Wilhelmus, 5656 AG Eindhoven (NL); LEBENS, Pascal Leonard Maria Theodoor, 5656 AG Eindhoven (NL)
(74) Representative: Philips Intellectual Property & Standards

(57) **Abstract**

A power transmitter (101) wirelessly providing power to a power receiver (105) comprises a transmitter coil (103) generating a power transfer signal in response to a drive signal generated by a driver (301). A communicator (307, 309) is arranged to communicate with the power receiver (105) and a power controller (305) varies a power level of the drive signal in response to power control messages received from the power receiver (105). A detector (315) detects communication errors for data messages from the power receiver (105) and the power controller (305) is arranged to reduce the power level of the drive signal from a current power level to a lower power level in response to the detector (315) detecting a communication error. The approach may allow improved operation, and in particular may provide improved robustness and operation in scenarios of degraded communication performance.

## Description

### FIELD OF THE INVENTION

The invention relates to wireless power transfer and in particular, but not exclusively, to a wireless power transfer system providing inductive power transfer to high power devices, such as e.g. kitchen appliances.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being further developed. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can be found on their website: http://www.wirelesspowerconsortium.com/index.html, where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.2kW.

A critical issue for wireless power transfer systems is that a safe and reliable operation is required with the operation being robust to errors, faults, and imperfect operating conditions. Accordingly, a number of safety and back-up operations have been designed and implemented. A particularly critical issue is that efficient and reliable communication is essential to ensure optimal operation. A particular error mechanism that has been proposed is that the power transfer is terminated if power control messages are not received from the power receiver during operation. However, whereas such an approach may provide a safer operation and prevent some unfortunate scenarios to occur, it also introduces a significant degradation to the service and operation performed. In general, currently used techniques tend to not provide optimal performance.

Accordingly, an improved power transfer approach/system would be advantageous and, in particular, an approach allowing improved error robustness, improved service, improved user friendliness, improved functionality, improved reliability, increased safety of operation, facilitated implementation, practicality, reduced cost and/or complexity, improved operation, improved robustness and resilience in the presence of degraded communication conditions, improved robustness to communication faults, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a power transmitter for wirelessly providing power to a power receiver via an electromagnetic power transfer signal, the power transmitter comprising: a transmitter coil arranged to generate the electromagnetic power transfer signal in response to a drive signal being applied to the transmitter coil; a driver arranged to generate the drive signal for the transmitter coil to generate the electromagnetic power transfer signal (typically when in a power transfer phase); a communicator arranged to communicate with the power receiver, the communicator being arranged to receive data messages from the power receiver; a power controller arranged to vary a power level of the drive signal in response to power control messages received from the power receiver; a detector arranged to detect communication errors for data messages from the power receiver; and wherein the power controller is arranged to reduce the power level of the drive signal from a current power level to a lower power level in response to the detector detecting a communication error.

The approach may allow an improved and/or facilitated power transfer process and operation. The approach may in particular provide improved robustness, mitigation, and/or adaptation to degraded communication performance. The approach may allow more robust and safe operation in case of communication degradation. The approach may in many scenarios and implementations allow continued support of e.g. limited functionality during a time of communication breakdown/errors while ensuring safe operation. The approach may provide an improved power transfer in situations of degraded communication performance.

In many embodiments and scenarios, the reduced power level may be no higher than 25%, 50%, 75%, or 90% of the current level. The lower power level is a non-zero power level and may in many embodiments not be below 1W, 5W, 10W, 20W and/or not below 1%, 2%, 5%, 10%, 20%, or 50% of the current power level. The current power level may be a power level of the drive signal when the communication error is detected (to occur).

In some embodiments, the lower power level may be no less than 80% or 90% of the current power level. Such an approach may reduce the impact on the power transfer and power receiver operation while potentially allowing communication to be successfully restored as a consequence of the change in operating point. In particular, such an approach may provide mitigation against potential communication "black holes" where conditions may substantially degrade communication for very particular circumstances and operations.

The communicator may be arranged to receive the data messages by demodulation of load modulation on the power transfer signal and/or on a separate communication carrier. The communicator may be a Near Field Communication (NFC) communication unit arranged to receive NFC data from the power receiver.

A data message may comprise one or more bits. The communication error may be a missing data message or may e.g. be one or more bit errors in a received data message.

According to an optional feature of the invention, the data messages are power control loop messages.

This may provide improved and/or facilitated operation and/or implementation and/or performance in many scenarios.

The power control loop messages may be power control loop messages requesting a change in the power level of the drive signal/ power transfer signal. The power control loop messages may be power control loop setpoint messages and/or power control loop error messages.

According to an optional feature of the invention, the data messages are repeating status messages.

This may provide improved and/or facilitated operation and/or implementation and/or performance in many scenarios.

The data messages may be periodic status messages. A repetition rate for the repeating status messages may not be less than 1, 2, 5, 10, 20, 100Hz.

According to an optional feature of the invention, the detector is arranged to detect the communication error in response to no valid message having been received from the power receiver for a given duration.

This may provide improved and/or facilitated operation and/or implementation and/or performance in many scenarios and may in particular provide improved performance in a case of degraded communication performance/conditions.

The detector may be arranged to detect the communication error in response to no valid message having been received from the power receiver within a given time interval.

The detector may be arranged to detect the communication error in response to no message having been received from the power receiver within a given time interval/for a given duration.

According to an optional feature of the invention, the power controller is arranged to reduce the power level of the drive signal subject to the power level of the drive signal exceeding a threshold.

This may provide improved and/or facilitated operation and/or implementation and/or performance in many scenarios and may in particular provide improved performance in a case of degraded communication performance/conditions.

The power controller is arranged to reduce the power level of the drive signal only if the power level of the drive signal exceeds a threshold.

According to an optional feature of the invention, the power controller is arranged to adapt the power level of the drive signal in response to the power control messages subject to maintaining the power level of the drive signal below a maximum power level, and to reduce the maximum power level in response to the detection of the communication error.

This may provide improved and/or facilitated operation and/or implementation and/or performance in many scenarios and may in particular provide improved performance in a case of degraded communication performance/conditions.

According to an optional feature of the invention, the power controller is arranged to further reduce the power level below the lower power level in response to a duration of detecting communication errors for the data messages exceeding a given time interval.

This may provide improved and/or facilitated operation and/or implementation and/or performance in many scenarios and may in particular provide improved performance in a case of degraded communication performance/conditions.

According to an optional feature of the invention, the power controller is arranged to determine the lower power level in dependence on a duration of a time interval during which communication errors for the data messages are detected.

This may provide improved and/or facilitated operation and/or implementation and/or performance in many scenarios and may in particular provide improved performance in a case of degraded communication performance/conditions.

According to an optional feature of the invention, the power controller is arranged to control the driver to terminate power transfer in response to duration of a time interval during which communication errors for the data messages are detected exceeding a threshold.

This may provide improved and/or facilitated operation and/or implementation and/or performance in many scenarios and may in particular provide improved performance in a case of degraded communication performance/conditions.

In some embodiments, the power controller is arranged to control the driver to switch-off the drive signal in response to duration of a time interval during which communication errors for the data messages are detected exceeding a threshold.

According to an optional feature of the invention, the power controller is arranged to increase the power level of the drive signal to above the lower power level in response to a detection of a data message being received without communication errors.

This may provide improved and/or facilitated operation and/or implementation and/or performance in many scenarios and may in particular provide improved performance in a case of degraded communication performance/conditions. It may in particular allow fast and efficient resumption of power transfer at suitable levels following a time of degraded communication performance.

According to an optional feature of the invention, the power controller is arranged to set the power level of the drive signal to the current power level in response to a detection of a data message being received without communication errors.

This may provide improved and/or facilitated operation and/or implementation and/or performance in many scenarios and may in particular provide improved performance in a case of degraded communication performance/conditions. It may in particular allow fast and efficient resumption of power transfer at suitable levels following a time of degraded communication performance.

According to an optional feature of the invention, the communicator is arranged to receive a data message transmission rate indication from the power receiver, the data message transmission rate indication being indicative of a transmission rate for data messages from the power receiver; and the detector is arranged to detect the communication error dependent on the data message transmission rate indication.

This may provide improved and/or facilitated operation and/or implementation and/or performance in many scenarios and may in particular provide improved performance in a case of degraded communication performance/conditions.

In some embodiments, the data message transmission rate indication may be indicative of a transmission rate for particular data messages, such as for repeating power control loop messages and/or repeating status messages.

According to an optional feature of the invention, the communicator is arranged to receive a configuration data message from the power receiver, the configuration data messages including a reduced power level indication; and the power controller is arranged to determine the lower power level from the reduced power level indication.

This may provide improved and/or facilitated operation and/or implementation and/or performance in many scenarios and may in particular provide improved performance in a case of degraded communication performance/conditions.

According to an optional feature of the invention, the power controller is arranged to determine the lower power level in dependence on a property of the communication error.

This may be particularly advantageous in many embodiments.

According to an aspect/feature of the invention, there is provided a method of operation for a power transmitter wirelessly providing power to a power receiver via an electromagnetic power transfer signal, the method comprising: a transmitter coil generating the electromagnetic power transfer signal in response to a drive signal being applied to the transmitter coil; generating the drive signal for the transmitter coil to generate the electromagnetic power transfer signal (typically when in a power transfer phase); communicating with the power receiver including receiving data messages from the power receiver; varying a power level of the drive signal in response to power control messages received from the power receiver; detecting communication errors for data messages from the power receiver; and reducing the power level of the drive signal from a current power level to a lower power level in response to the detector detecting a communication error.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of an electrical equivalence diagram for the power transfer function;
FIG. 3 illustrates an example of elements of a power transmitter in accordance with some embodiments of the invention;
FIG. 4 illustrates an example of a half bridge inverter for a power transmitter;
FIG. 5 illustrates an example of a full bridge inverter for a power transmitter;
FIG. 6 illustrates an example of elements of a power receiver in accordance with some embodiments of the invention; and
FIGs. 7-9 illustrate examples of possible adaptations of the power level of a power transfer signal in accordance with some embodiments of the invention.

### DETAILED DESCRIPTION OF THE EMBODIMENTS

The following description focuses on embodiments of the invention applicable to a wireless power transfer system utilizing a power transfer approach such as is known from the Qi Specification or the Ki Specification. However, it will be appreciated that the invention is not limited to this application but may be applied to many other wireless power transfer systems.

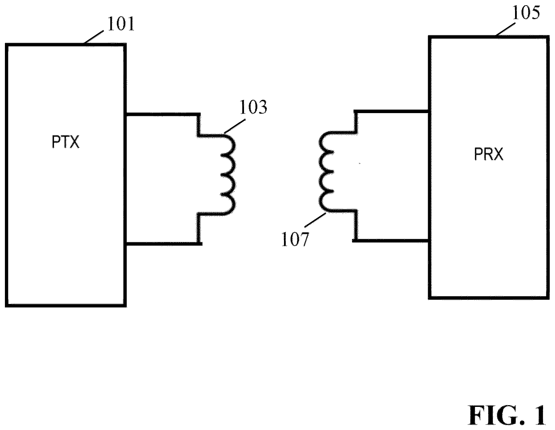

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. During power transfer, the electromagnetic signal transfers power to the power receiver 105 (and specifically to the receiver coil 107) and it will in the following be referred to as the power transfer signal.

The power transfer signal may typically have a frequency between around 20 kHz to around 1 MHz, and often for Qi compatible systems typically in the range from 95 kHz to 400 kHz or for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal! magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications (the basic power profile), up to 15W for Qi specification version 1.3, 2.0, 2.1, and up to 25W for Qi specification version 2.2. Power transfer levels may even be in the range up to 100W for higher power applications such as power tools, laptops, drones, robots etc., and in excess of 100 W and up to more than 2000W for very high power applications, such as e.g. for Ki kitchen applications.

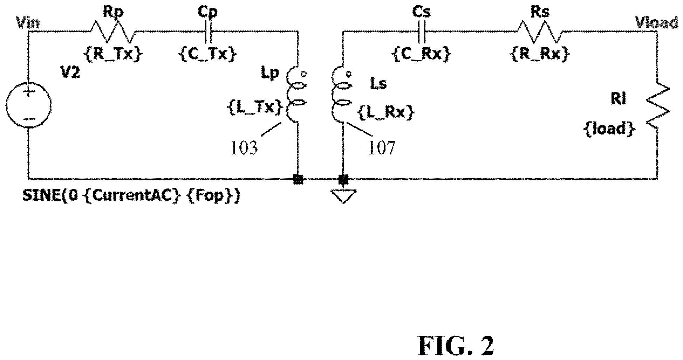

An example of an electrical equivalence diagram for the power transfer function of the power transmitter 101 and the power receiver 105 is illustrated in FIG. 2. A wide range of power transmitters and power receivers may exist in a given system, and these may have substantially different properties and parameters. For example, the coil sizes, induction values, and loads may vary substantially. Accordingly, the system parameters, as specifically represented in FIG. 2, may in practice vary significantly between different devices, mechanical constructions, positioning etc. In particular, the placement of the power receiver, and thus the relative positions of the receiver coil 107 and the transmitter coil 103, substantially affect the coupling between the coils, i.e. the primary (power transmitter side) inductor Lp and the secondary (power transmitter side) inductor Ls, and thus may significantly change the system behavior.

In the following, the operation of the power transmitter 101 and the power receiver 105 will be described with specific reference to an embodiment generally in accordance with the Qi or Ki Specifications (except for the herein described (or consequential) modifications and enhancements).

Many wireless power transfer systems utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

In most power transfer systems, before power transfer is initiated, a communication channel between the power transmitter 101 and the power receiver 105 is established. When the communication has been set up and identification of the two devices has been achieved, the power transmitter 101 may start power transmission to the power receiver 105.

Normally, a wireless power transfer system employs a power control loop in order to steer the system towards the appropriate operating point. This power control loop changes the power level of the drive signal and thus the power level of the power transfer signal and the amount of power that is transmitted from the power transmitter to the power receiver. The received power (or voltage or current) can by the power receiver be measured and compared to a desired value. In response to the comparison, an error signal/value can be determined. Power control values can then be transmitted to the power transmitter, e.g. as error values or desired power level setpoint values. The power control function in the power transmitter may then adapt the power level of the drive signal to reduce the static error, ideally to zero.

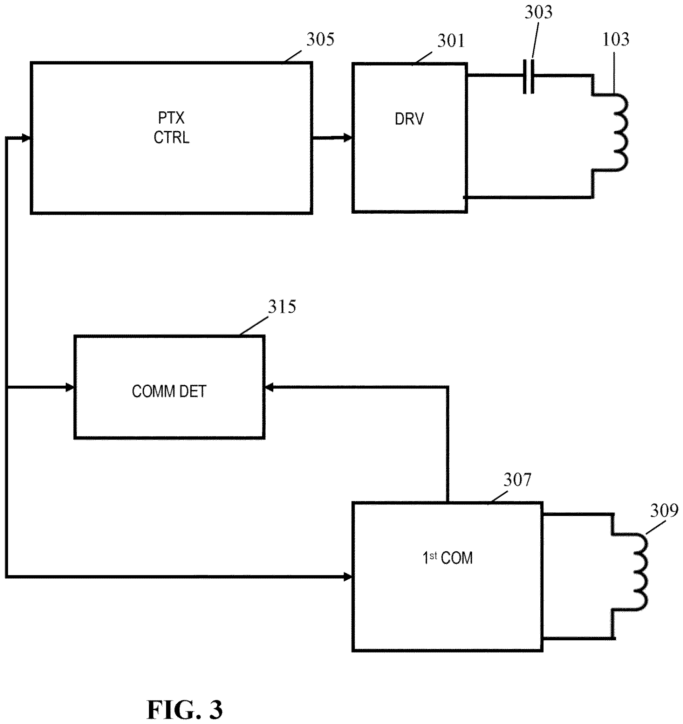

FIG. 3 illustrates exemplary elements of the power transmitter 101 of FIG. 1 in more detail.

The power transmitter 101 includes a driver 301 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 303. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

The use of a resonance circuit including the transmitter coil 103 is well known to provide a more efficient power transfer in many scenarios and enables control of the power transfer by the frequency of the drive signal. Furthermore, having a power receiver which also employs a resonance circuit, i.e. where the receiver coil 107 is part of a resonance circuit, may result in resonant power transfer which enables a highly efficient power transfer.

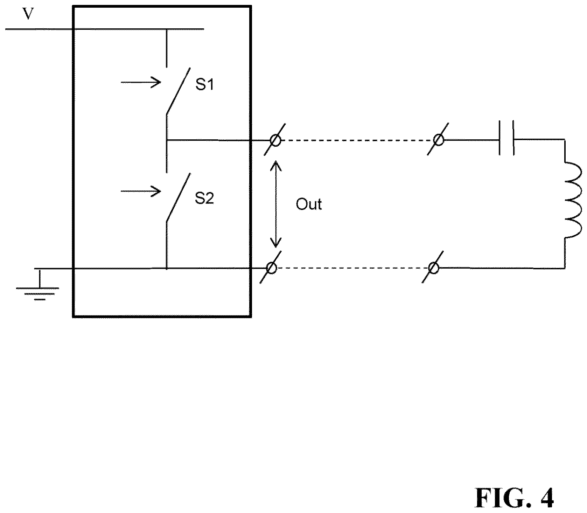

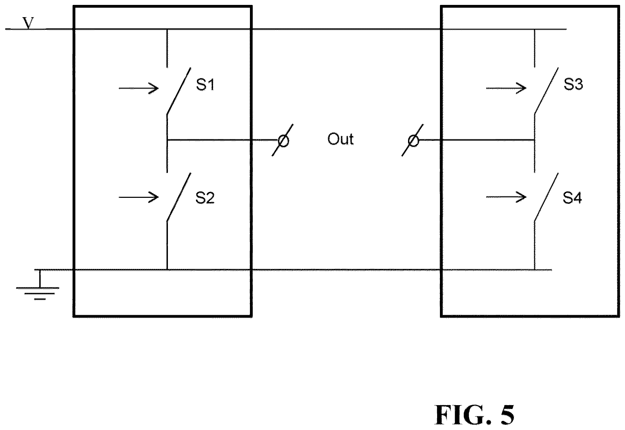

The driver 301 generates the current and voltage which is fed to the output resonance circuit and thus to the transmitter coil 103. The driver 301 is typically a drive circuit in the form of an inverter which generates an alternating signal from a DC Voltage. The output of the driver 301 is typically a switch bridge generating the drive signal by the appropriate switching of switches of the switch bridge. FIG. 4 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 5 shows a full-bridge switch bridge/ inverter. The switches S1 and S2 are controlled such that they are never closed at the same time. The switches S3 and S4 are controlled such that they are never closed at the same time. Alternatingly switches S1 and S4 are closed while S2 and S3 are open, and then S2 and S3 are closed while S1 and S4 or open, thereby creating a square-wave signal at the output. The switches are opened and closed with the desired frequency and phase angle between the two legs.

The power transmitter 101 further comprises a power transmitter controller 305 which is arranged to control the operation of the power transmitter 101 in accordance with the desired operating principles. Specifically, the power transmitter 101 may include many of the functionalities required to perform power control in accordance with the Qi or Ki Specification.

The power transmitter controller 305 is in particular arranged to control the generation of the drive signal by the driver 301, and it can specifically control the power level of the drive signal, and accordingly the level of the generated power transfer signal. The power transmitter controller 305 comprises a power loop controller controlling a power level of the power transfer signal in response to the power control messages received from the power receiver 105 during the power transfer phase.

In the example of the power transmitter of FIG. 3, the power transmitter 101 comprises a first communicator 307 which is arranged to receive data and messages from the power receiver 105 as well as transmit data and messages to the power receiver 105 (as will be appreciated by the skilled person, a data message may provide one or more bits of information).

In the approach, the communication is performed by modulation of a communication carrier that is generated by a first communication coil 309. The first communicator 307 is coupled to the first communication coil 309 and is arranged to generate a communication drive signal which is fed to the first communication coil 309 to generate the communication carrier. The first communicator 307 may typically be arranged to generate the communication drive signal/communication carrier to have a substantially different frequency than the power transfer drive signal/ power transfer signal. In many embodiments, the frequency of the communication carrier may be no less than 10, 100, or 500 times higher than the frequency of the power transfer signal. In many embodiments, the frequency of the communication drive signal/ communication carrier may have a frequency of no less than 500kHz, 1 MHz, or 10 MHz. Specifically for an NFC implementation, the communication carrier frequency may be 13.56 MHz.

The first communicator 307 may be arranged to modulate the communication drive signal/ communication carrier in order to transmit data to the power receiver (in the following references to the communication drive signal also include the implicit reference to the communication carrier as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

For communication from the power receiver to the power transmitter, the modulation of the communication drive signal may be a load modulation. The power receiver may be arranged to modulate the communication drive signal by varying a loading of the communication drive signal generated by the communication coil 309 in accordance with the data to be transmitted. The first communicator 307 is specifically arranged to sense variations in the voltage and/or current of the communication coil 307 and to demodulate the load modulation based on these. In typical embodiments, the first communicator 307 may for example receive data from the power receiver and forward it to the power transmitter controller 305 for controlling the power transfer signal etc.

In some embodiments, the communication may be in accordance with the Near Field Communication, NFC, Specifications and the power receiver may specifically include NFC functionality. In these embodiments, the first communicator 307 and the first communication coil 309 may implement (at least) the functionality of an NFC reader. Thus, in some embodiments, the communication drive signal! communication carrier is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

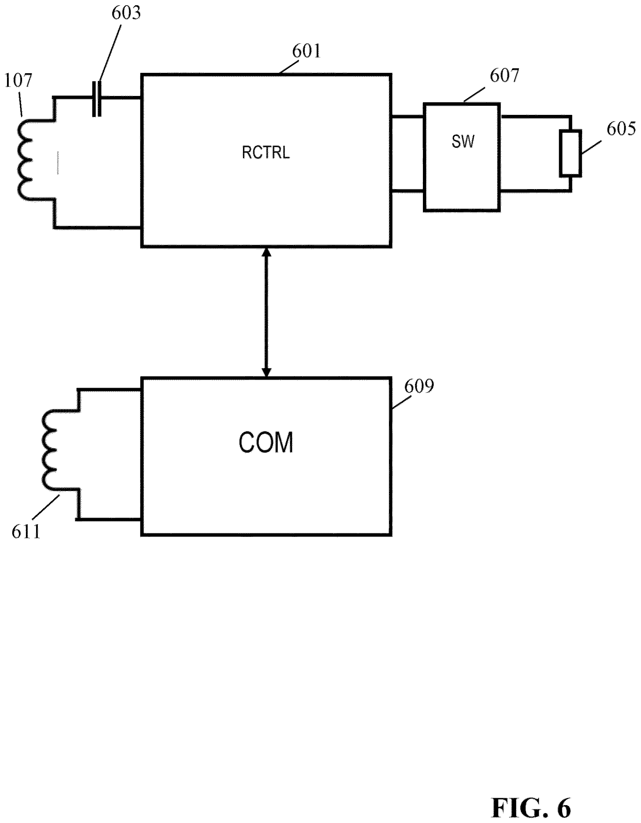

FIG. 6 illustrates some exemplary elements of the power receiver 105.

The receiver coil 107 is coupled to a power receiver controller 601 via a capacitor 603 which together with the receiver coil 107 forms an input resonance circuit. Thus, the power transfer may be a resonant power transfer between resonance circuits.

The power receiver controller 601 couples the receiver coil 107 to a load 605 via a switch 607 which specifically may be capable of connecting, disconnecting (or even shorting) the load 605. The power receiver controller 601 includes a power control path which converts the power extracted by the receiver coil 107 into a suitable supply for the load 605. In some embodiments, the power receiver controller 601 may provide a direct power path which simply connections the input resonance circuit to the switch 607 or load 605, i.e. the power path of the power transmitter controller 303 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 607 may only be present in some embodiments and that in some embodiments the load 605 may permanently be coupled to the input resonance circuit.

In addition, the power receiver controller 601 may include various power receiver controller functionality required to perform power transfer, and in particular functions required to perform power transfer in accordance with the Qi or Ki Specifications.

The power receiver controller 601 may further comprise functionality for communicating with the power transmitter 101. For example, it may be arranged to decode and demodulate data modulated onto the power transfer signal and it may be arranged to transmit data to the power transmitter 101 by load modulating the power transfer signal. In many embodiments, such as in the example of FIG. 6, a separate communication function, such as an NFC communication function, may be employed.

In the example of the power receiver of FIG. 6, the power receiver 105 comprises a second communicator 609 and a second communication coil 611. The second communication coil 611 is arranged to couple to the first communication coil 309 and thus the communication carrier induces a current (at least an emf) in the second communication coil 611.

The second communicator 609 is coupled to the second communication coil 611 and is arranged to determine amplitude variations in the induced signal and to demodulate amplitude modulations of the communication carrier. Thus, the second communicator 609 is arranged to decode data transmitted from the power transmitter by amplitude modulation of the communication carrier. It will be appreciated that in other embodiments, the second communicator 609 may be arranged to decode data modulated onto the communication carrier using other modulation formats such as frequency or phase modulation.

The second communicator 609 is further arranged to load modulate the communication carrier in order to transmit data from the power receiver to the power transmitter. Specifically, the second communicator 609 may comprise a load (such as a capacitor) which depending on the data to transmit can be switched between being coupled to the second communication coil 611 and not being coupled to the second communication coil 611. These load modulations may then be detected by the first communicator 307 of the power transmitter.

In the specific example, the second communication coil 611 and the second communicator 609 may provide NFC compatible communication operation. Specifically, the second communication coil 611 may be arranged to provide functionality corresponding to an NFC tag and to decode data that has been ASK modulated onto the communication carrier in accordance with the NFC specifications.

Thus, the second communicator 609 is arranged to transmit data to the power transmitter by varying the loading of the second communication coil 611 in response to data to be transmitted to the power transmitter 101. The load variations are then detected and demodulated by the power transmitter 101 as will be known to the person skilled in the art.

In the example, the second communicator 609 is furthermore arranged to demodulate amplitude, frequency, and/or phase modulation of the communication carrier in order to retrieve data transmitted from the power transmitter.

The power receiver and the power transmitter can accordingly communicate using a communication carrier which in many cases may be a dedicated communication carrier, such as specifically an NFC communication carrier. In some embodiments, such as specifically Qi applications, the communication may use the power transfer signal as a communication carrier.

In operation, the system is arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control messages that are received from the power receiver. A power control loop is accordingly employed which controls a power property of the power transfer signal to result in the desired operating point at the power receiver. It will be appreciated that many other types of data may be exchanged between the power transmitter and the power receiver to support a range of functions.

The wireless power transfer system accordingly employs an approach where the power level of the power transfer from the power transmitter to the power receiver is set by the power transmitter based on the information provided from the power receiver. The power control loop is critical to the proper and efficient operation of the power transfer and the power transfer operation and performance is accordingly highly dependent on an accurate and reliable communication, and in particular on the accurate and reliable communication of messages from the power receiver to the power transmitter.

However, inevitably, communication errors can occur resulting in degraded performance and potentially even in a risk the power level could become uncontrolled and could be set to inappropriate values. Accordingly, most wireless power transfer systems include safety functions that terminate and switch-off power transfer if there is a communication error. However, such an approach tends to be suboptimal in many scenarios and for many applications.

The wireless power transfer system of FIGs. 1-6 employs a different approach which provides advantageous operation in a variety of practical wireless power transfer systems, applications, and scenarios.

In the approach, the power transmitter comprises a detector 315 arranged to detect a communication error for data messages transmitted to the power transmitter from the power receiver.

The detector 315 may in some embodiments be arranged to determine that the number of bit errors for a given message (or in a set of messages) exceeds a given threshold. For example, if a data message is considered to be received but which comprises an invalid data word/bit sequence, it may be considered that a communication error has occurred in the data message. The error may for example be detected by the use of error correcting/detection bits, by determining that e.g. a check value (such as a CRC value) does not match, by determining that received data does not match a set of valid data messages etc. In some cases, the detector 315 may be arranged to determine that a communication error occurs in response to a detection that a received signal to noise ratio for the received/demodulated data value(s) is(are) below a threshold. For example, the first communicator 307 may be arranged to determine soft-decision values for the received data, i.e. the determined data may be associated with a confidence indication. If, e.g. an average, confidence level is below a given threshold, the detector 315 may determine that the received data is not sufficiently reliable and accordingly that a communication error has occurred.

In some embodiments, the criterion may consider a plurality of data messages, such as for example by employing a criterion where a communication error is detected if more than a given number of bit errors is detected in a given number of data messages or if the confidence level over a plurality of data messages is below a given threshold.

In some embodiments, the detector 315 may be arranged to determine that a communication error has occurred if no valid message has been received from the power receiver within a given duration/time interval.

As an example, a power control error/setpoint messages may be required to be transmitted with a given maximum interval, such as e.g. at least every 250 msec. If no message, or specifically in some cases if no power control error/setpoint message, has been received within a suitable time interval, such as e.g. within a duration of no less 250, 300, 400, 500, 600, or 750 msec, the detector 315 may determine that a communication error has occurred.

In many cases, if a data message is received that is not a valid data message, e.g. if it does not comprise valid data patterns or is a message that does not meet the requirements (e.g. is not a power control message), it will not be considered a valid message and therefore may be ignored which considering whether the criterion of receiving a valid data messages is met.

The detector 315 is coupled to the power transmitter controller 305 which is arranged to set/control the power level of the drive signal, and thus the power transfer signal, in dependence on a detection of a communication error.

In particular, in response to the detector 315 determining that a communication error has occurred, the power transmitter controller 305 is arranged to reduce the power level of the drive signal from the current power level to a lower power level. Thus, in the approach, if a communication error occurs (including if communication stops completely), the power transmitter independently starts to reduce power while still providing some power for the power transfer and thereby allowing the power receiver to still be powered although at a lower power level. This may provide a much improved operation in many cases as it may in many scenarios allow the power receiver to still perform a number of operations while at the same time ensuring that safe operation can be maintained even in the case of a failure of the critical communication.

The lower power level may in many embodiments be a predetermined power level that is selected to be a safe and reasonable power level for back-up operation. For example, in many cases, the power transmitter controller 305 may in response to the detection of the communication error reduce the power level to, say 10W. For high power applications, such as for example a kettle or a blender, this may be too low to allow normal or even reduced operation for the main function, but it may e.g. be sufficient to power the control and user interface circuits of the power receiver device. E.g., it may be sufficient to allow the display of the device to provide a feedback to the user. The reduced power level may for example also allow fault detection, diagnosis, reporting, and/or recovery functions to still operate.

In many embodiments, the lower power level may in particular be sufficient for powering the communication functionality of the power receiver device. The approach may allow the power receiver to proceed to seek to communicate with the power transmitter and thus may allow the communication to be reestablished. For example, the power receiver device may be moved to allow communication to be resumed. If communication is restored, the approach may allow the power transfer operation to resume at normal levels and thus the approach may provide a recovery function for situations where communication errors have occurred.

The approach may in particular implement a (typically slow) reduction of the transmitter power when a communication fault occurs thereby reducing the risk of e.g. damage to the power receiver due to excessive power being provided, yet at the same time minimizing the degradation of functionality and often allowing an improved user experience.

A particular advantage of the approach is that it may in itself allow recovery of communication and may allow communication to be restored. The Inventors have realized that in many wireless power transfer systems, such as in particular for Qi or Ki systems, communication errors may in some cases occur for very specific operating conditions. Such communication "black holes" have by the inventors been realized to occur, and indeed often to cause in a complete breakdown of the communication. The inventors have further realized that such communication issues tend to be very particular to specific operating points with even relatively small adjustments or changes in the operating conditions often having a drastic effect on the attainable communication performance. The inventors have in particular realized that in many scenarios, changing the power level of the drive signal/power transfer signal may allow communication to be restored.

The described approach of changing the power level, and in particular reducing the power level to a lower value, when a communication error is detected, in many scenarios in itself allows the conditions to be changed such that communication may be restored.

In many embodiments, the change in power level may be relatively small. For example, in many embodiments, the new lower power level may be no more than 10%, 20%, 30%, or 50% lower than the current level before reduction. In many embodiments, the new lower power level may be no more than 5W, 10W, 20W, or 50W lower than the current level before reduction. Such relatively small changes may reduce the impact on the main power transfer operation, yet often be sufficient to enable communication to be restored.

In some embodiments, the power transmitter may be arranged to further reduce the power level of the drive signal/power transfer signal if the communication error persists. Thus, in some embodiments, the power transmitter controller 305 is arranged to further reduce the power level below in response to a duration of the time in which communication errors for the data messages are detected exceeds a given threshold.

For example, the power transmitter controller 305 may be arranged to reduce the power level of the drive signal by a relatively small amount, say 10-20% in response to an expected power control message not being received (e.g. the time since the last successfully received power control message exceeds a threshold). This may or may not allow communication to be restored from a communication "black-hole". If communication is successfully restored, the power transfer may proceed at/from this lower power level (which may then often be adapted based on the power control operation). However, if communication does not recover and communication errors continue to be detected, the power transmitter controller 305 may proceed to change the power level to a very low level, say 10W, that allow support functionality of the power receiver to be powered, but which is not sufficient for the main function, such as heating or blending.

In some scenarios, the power level may be changed depending on the duration of the time interval in which communication errors are detected. For example, in many embodiments, the power level may be a monotonically decreasing function of the duration in which communication errors have been detected. Thus, the longer the period of communication errors, the lower the power level of the drive signal. In particular, the power level may gradually be stepped down the longer the duration.

In many cases, the power transmitter controller 305 may in particular be arranged to switch-off the drive signal and/or to terminate the power transfer in response to the duration of a time interval during which communication errors for the data messages are detected exceeding a threshold.

In particular, in some embodiments, if communication errors persist for long enough time interval, it may indicate that there is a more substantial issue and that a power transfer is not suitable or feasible. It may accordingly be advantageous to terminate the power transfer in order to further ensure that no unsafe or undesired power transfer is continued.

In some embodiments, the power transmitter controller 305 may proceed to support the power control operation after the reduction in power. In particular, the power transmitter may proceed to operate the power control as normal such that if power control messages are received from the power receiver requesting that the power level is increased above the new lower power level, the power transmitter proceeds to increase the power level as so requested. Thus, in some embodiments, the system may be able to recover from a communication error scenario when communication is restored by using the standard operation, and specifically using the power control loop operation, of the system during power transfer.

In some embodiments, the power transmitter controller 305 may be arranged to increase the power level of the drive signal in response to a detection of a data message being received without communication errors. In some cases, the power transmitter controller 305 may be arranged to increase the power level if any data message is received successfully as this may be an indication that communication has been successfully restored. In some embodiments, the power transmitter controller 305 may be arranged to increase the power level by a given amount for each successful data message received, and for example a gradual decrease in power levels may be gradually reversed in response to multiple data messages being successfully received.

In many embodiments, the power transmitter controller 305 may be arranged to restore the power level to the level it was at when the communication error was detected in response to a data message being successfully received. Specifically, if the power transmitter controller 305 detects that a data message has been received with no communication errors, it may proceed to restore the power level to the level that was employed immediately prior to the reduction of power due to the communication error.

In some embodiments, the data message may be required to be a specific data message or a specific type of data messages, such as specifically being a power control (setpoint/error) message. In some embodiments, the power transmitter controller 305 may for example when proceeding to reduce the level of the drive signal when a communication error is detected also store the current level of the drive signal. If the power transmitter controller 305 then subsequently detects that one (or e.g. more depending on the specific criterion used) power control setpoint/error message is received without any communication errors, the power transmitter controller 305 may proceed to instantly retrieve the stored level and reset the drive signal to this level.

Such approaches may allow a fast recovery following temporary communication error scenarios and may reduce the impact on the power transfer operation.

It will be appreciated that many different approaches and algorithms for reducing the power level may be applied.

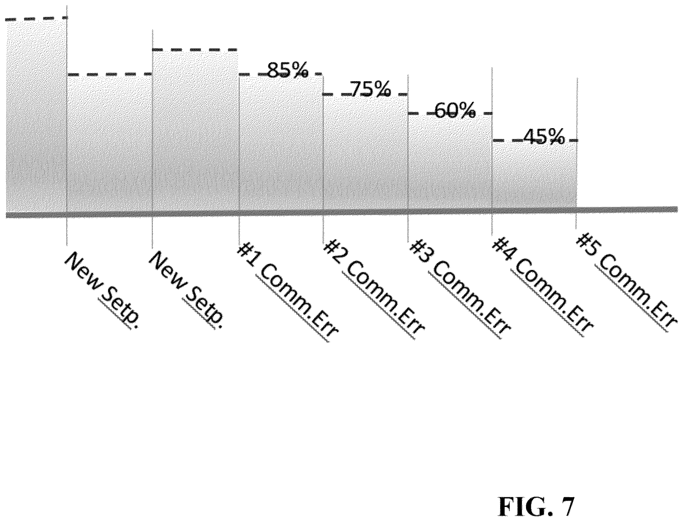

One possible example is illustrated in FIG. 7 which shows an example where a power control setpoint value/message is expected to be received from the power receiver at regular intervals.

FIG. 7 shows how the power level of the drive signal is first adapted/changed based on successfully received power control setpoint messages. In the approach, the power transmitter controller 305 may be arranged to reduce the power level each time a power control error message is not successfully received until a total of five power control error messages have been missed in which case the power transfer is terminated. In the specific example of FIG. 7, the power level is reduced to 85%, 75%, 60%, and 45% for each consecutive power control error message being missed until the fifth missed message is missed resulting in the power level of the drive signal/power transfer signal being reduced zero as the power transfer is terminated.

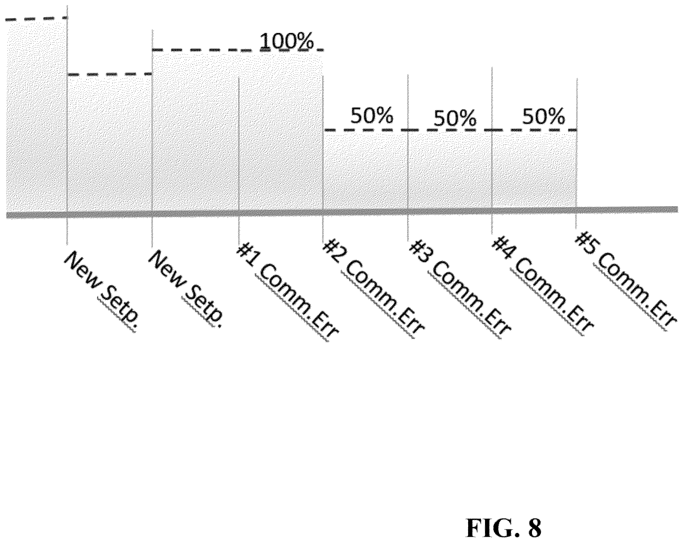

Another example is illustrated in FIG. 8. In this example, the power transmitter controller 305 is arranged to only reduce the power level if two consecutive power control error messages are missed in which case the power level is reduced by 50% until a total of five power control error messages have been missed at which time the power transfer is terminated.

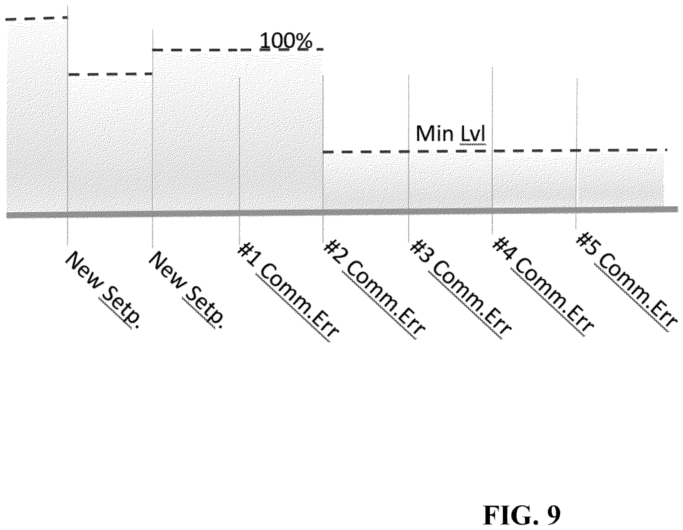

Yet another example is provided in FIG. 9. In this case, the power transmitter controller 305 is arranged to only reduce the power level if two consecutive power control error messages are missed in which case the power level is reduced to a fixed low/minimum level which is considered safe. The power level may then be maintained at this level even if no further power control error messages are received.

In many embodiments, the reduction in the power level of the drive signal when a power control error message is detected is subject to the power level of the drive signal exceeding a threshold. When the power transmitter controller 305 detects that a communication error has occurred, it may proceed to determine whether the power level exceeds a stored predetermined threshold or not, and it may proceed to only reduce the power if this is so. If instead, the current power level is below the threshold, the power transmitter may proceed to keep the level constant.

The predetermined power threshold for reduction may be determined to be at such a low level that it is considered that no unacceptable effects can occur, such as e.g. that unacceptable heating of other metal objects due to induction is not possible. In some cases, the threshold may be set very low, such as not in excess of 5W, 10W, 20W, or 50W.

In some cases, the threshold may be equal to the reduced power level, i.e. to the level to which the power transmitter controller 305 will reduce the drive signal power level if indeed it does proceed. In particular, if the reduced power level is an absolute value, such as e.g. a specific power level not exceeding 5W, 10W, 20W, or 50W, the power transmitter controller 305 may be arranged to reduce the power level to this value if it is currently exceeding the value. However, if the current power level is already below the intended reduced power level, the power transmitter controller 305 may proceed to not make any changes, but rather to keep the power level of the drive signal unchanged.

In some embodiments, the threshold may be a dynamic threshold that may for example be dependent on a current operational mode of the power transmitter or the power receiver. For example, in many embodiments, the power receiver may be arranged to operate in different power extraction modes that have different power levels, and the power transmitter controller 305 may be informed of the current mode (e.g. a message may be transmitted from the power receiver whenever the operating mode is changed). The power transmitter controller 305 may then change the threshold for reducing the power level in the event of communication errors in dependence on the received data.

The power transmitter controller 305 may be arranged to generally apply a power control loop which adapts the power level of the drive signal in response to the power control setpoint/error messages received from the power receiver. However, the control loop may further be subject to a maximum power level which the drive signal is not allowed to exceed. Thus, even if the power receiver requests increased power levels, the power level provided may be constrained/limited by the maximum power level.

The maximum power level may in many embodiments by an adjustable level and may for example be determined based on a negotiation and communication exchange between the power receiver and the power transmitter. For example, the power receiver may request a maximum power limit depending on the desired operation to be performed, and the power transmitter may proceed to set the maximum power level accordingly.

In some such embodiments, the power transmitter controller 305 may be arranged to reduce the power level by specifically reducing the maximum power level for the drive signal. In particular, if a communication error is detected, the power transmitter controller 305 may proceed to reduce the maximum power level below that requested by the power receiver. If the current power level is accordingly higher than the new maximum power level, it will be reduced to that level.

In some embodiments, the power control error message may not differentiate between data messages when deciding whether to reduce the power level. For example, if any communication error is detected in any message, the power transmitter controller 305 may proceed to reduce the power level.

In other embodiments, the power transmitter controller 305 may specifically consider particular messages. In particular, in many embodiments, the power transmitter controller 305 may in particular consider power control loop messages and/or periodic status messages.

In particular the power receiver may be arranged to transmit power control setpoint/error messages at regular intervals with these being used to control the power level of the drive signal during normal operation, i.e. they are used to form the power control loop. Accordingly, these messages have a particular and direct input on the setting of the drive signal power level and are accordingly particularly sensitive to communication errors. In contrast, some other messages may not directly affect or have an impact on the drive signal, or even on the power transfer operating parameters, and thus the system may be much less sensitive to communication errors in such messages.

In some embodiments, the power transmitter controller 305 may accordingly be arranged to consider the power control messages when determining whether a communication error has occurred that should result in the power level being reduced. For example, if a power control message is not received within a time interval in which such a message should have been received, the power transmitter controller 305 may proceed to reduce the power level of the drive signal.

In some embodiments, the power transmitter controller 305 may alternatively or additionally consider status messages transmitted from the power receiver. In many systems, such as Ki or Qi systems, the power receiver is required to transmit periodic status messages which may provide information on current device operating modes. Such status messages may be suitable for detecting whether communication is currently supported or whether it is not currently feasible, e.g. it may be suitable for detecting if the system is in a communication "black hole". The power transmitter controller 305 may in particular be arranged to determine that a communication error is detected if a given number of status messages are not received within a time interval in which they are expected to be received.

The consideration of both status messages and power control messages may be particularly advantageous in many embodiments. It may provide additional messages to consider thereby allowing a more accurate determination and/or e.g. early detecting that a communication degradation is currently experienced.

In some approaches, the operation may be adapted based on data and messages received from the power receiver.

In some embodiments, the first communicator 307 may be arranged to receive a message transmission rate indication from the power receiver where the data message transmission rate indication is indicative of/describes a transmission rate for data messages from the power receiver. The transmission rate indication may in some embodiments be provided for specific data messages, such as specifically for power control messages and/or status messages.

In many wireless power transfer systems, the frequency at which power control messages are transmitted may vary between different power receivers, dependent on the specific power levels being transferred, depending on the power control operation at the power receiver, depending on how fast a change in the power level is required, etc. In some embodiments, the power receiver is arranged to transmit the message transmission rate indication to the power transmitter informing the power transmitter of the current/upcoming rate.

The power transmitter controller 305 may use the information provided by the message transmission rate indication to adapt the communication error detection performed by the detector 315. In particular, the detector 315 may use the information to set a maximum duration between power control messages and/or status messages that is required in order for the detector 315 not to determine that a communication error has occurred.

For example, if a message transmission rate indication indicating that power control messages will be transmitted every 100 msec, the detector 315 may be set to detect a communication error in response to a detection that no (valid) power control messages has been received within a 150 msec window since the previous (validly) received power control message. If a message transmission rate indication is subsequently received indicating that power control messages will be transmitted every 250 msec, the detector 315 may change to detect a communication error occurring in response to a detection that no (valid) power control message is received within a 300 msec window since the previous (validly) received power control message.

The approach may allow a faster and improved detection of communication errors which may be particularly adapted to the current operating conditions.

In some embodiments, the power receiver and power transmitter may be arranged to exchange configuration and/or capability information/data that allows the operation and parameters to be adapted to the specific devices.

For example, as part of the power transfer initialization phase, the power transmitter may inform the power receiver of the capability to power down in response to detection of communication errors. It may further include information of how the power transmitter will power down in response to a detection of a communication error.

This may allow the power receiver to prepare for such a potential operation. For example, if the power receiver during power transfer detects that the power level is reduced in accordance with an indicated pattern, it may proceed to generate a user alert indicating that a communication error has occurred or e.g. just that power is reduced. As another example, it may proceed to change the operating parameters for the communication, such as a change to a higher modulation depth, in order to increase the likelihood of a successful communication being re-established.

In some embodiments, the power receiver may possibly respond by requesting that the functionality is suspended for the current operation. This may for example be suitable for scenarios in which it can be guaranteed that safe operation can be performed even if communication breaks down.

In many embodiments, the power receiver may, e.g. as part of a power transfer initialization phase (e.g. a configuration or negotiation phase) proceed to transmit a request for a specific parameter to be used during such a communication error detection operation.

In particular, the power receiver may transmit a configuration data message that includes a reduced power level indication for a reduced power level requested by the power receiver. If the power transmitter considers this to be an acceptable value, it may e.g. transmit a confirmation message back to the power transmitter. It may then proceed to set the reduced power level to the requested value, and if a communication error is then detected, the power transmitter may proceed as previously described but with the reduced power level being the one requested by the power receiver.

Such an approach may provide improved performance and operation in many embodiments. Indeed, the suitable "safe" power level that will however still allow a power receiver to perform some desired function depends heavily on the individual power receiver and the function provided by this. Thus, the preferred reduced power level that allows the power receiver to still operate without shutting down/dropping off varies a lot dependent on the power receiver and is potentially substantially different for different power receivers. The approach of the power receiver requesting a suitable reduced power level provides an efficient means of adapting and optimizing the operation for that specific power receiver.

In some embodiments, the power transmitter controller 305 may be arranged to determine the reduced power level dependent on a property of the communication error. For example, if an individual bit error is detected in a set of received power control messages, this may indicate a minor problem and some uncertainty about the communication, and thus a minor uncertainty about the appropriate power level. However, as some data bits are received, it also indicates that the power receiver is still present and has not e.g. been replaced by another device. Accordingly, the power reduction may be relatively low, e.g. a 10-20% reduction of the current power level may be applied.

If instead no data messages are received at all, it is more likely that a more substantial communication error has been detected which is indicative of a more substantial change of the current operating conditions, including e.g. the possibility of the power receiver having been removed completely. Accordingly, the potential risk of generating a too powerful power transfer signal is increased and the power transmitter controller 305 may accordingly be arranged to reduce the power level to not exceed a maximum level (such as e.g. 5W or 10W) even if this results in a vary substantial reduction relative to the level before the detection of the communication error (such as e.g. a 90% reduction).

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A power transmitter (101) for wirelessly providing power to a power receiver (105) via an electromagnetic power transfer signal, the power transmitter (101) comprising:
a transmitter coil (103) arranged to generate the electromagnetic power transfer signal in response to a drive signal being applied to the transmitter coil (103);
a driver (301) arranged to generate the drive signal for the transmitter coil (103) to generate the electromagnetic power transfer signal;
a communicator (307, 309) arranged to communicate with the power receiver (105), the communicator (307, 309) being arranged to receive data messages from the power receiver (105);
a power controller (305) arranged to vary a power level of the drive signal in response to power control messages received from the power receiver (105);
a detector (315) arranged to detect communication errors for data messages from the power receiver (105); and wherein
the power controller (305) is arranged to reduce the power level of the drive signal from a current power level to a lower power level in response to the detector (315) detecting a communication error.

2. The power transmitter of claim 1 wherein the data messages are power control loop messages.

3. The power transmitter of claim 1 wherein the data messages are periodic status messages.

4. The power transmitter of any previous claim wherein the detector (315) is arranged to detect the communication error in response to no valid message having been received from the power receiver for a given duration.

5. The power transmitter of any of the previous claims wherein the power controller (305) is arranged to reduce the power level of the drive signal subject to the power level of the drive signal exceeding a threshold.

6. The power transmitter of any of the previous claims wherein the power controller (305) is arranged to adapt the power level of the drive signal in response to the power control messages subject to maintaining the power level of the drive signal below a maximum power level, and to reduce the maximum power level in response to the detection of the communication error.

7. The power transmitter of any previous claim wherein the power controller (305) is arranged to further reduce the power level below the lower power level in response to a duration of detecting communication errors for the data messages exceeding a given time interval.

8. The power transmitter of any of the previous claims wherein the power controller (305) is arranged to determine the lower power level in dependence on a duration of a time interval during which communication errors for the data messages are detected.

9. The power transmitter of any of the previous claims wherein the power controller (305) is arranged to control the driver (301) to terminate power transfer in response to duration of a time interval during which communication errors for the data messages are detected exceeding a threshold.

10. The power transmitter of any of the previous claims wherein the power controller (305) is arranged to increase the power level of the drive signal to above the lower power level in response to a detection of a data message being received without communication errors.

11. The power transmitter of claim 10 wherein the power controller (305) is arranged to set the power level of the drive signal to the current power level in response to a detection of a data message being received without communication errors.

12. The power transmitter of any of the previous claims wherein the communicator (307, 309) is arranged to receive a data message transmission rate indication from the power receiver, the data message transmission rate indication being indicative of a transmission rate for data messages from the power receiver; and the detector is arranged to detect the communication error dependent on the data message transmission rate indication.

13. The power transmitter of any of the previous claims wherein the communicator (307, 309) is arranged to receive a configuration data message from the power receiver (105), the configuration data messages including a reduced power level indication; and the power controller (305) is arranged to determine the lower power level from the reduced power level indication.

14. The power transmitter of any of the previous claims wherein the power controller (305) is arranged to determine the lower power level in dependence on a property of the communication error.

15. A method of operation for a power transmitter (101) wirelessly providing power to a power receiver (105) via an electromagnetic power transfer signal, the method comprising:
a transmitter coil (103) generating the electromagnetic power transfer signal in response to a drive signal being applied to the transmitter coil (103);
generating the drive signal for the transmitter coil (103) to generate the electromagnetic power transfer signal;
communicating with the power receiver (105) including receiving data messages from the power receiver (105);
varying a power level of the drive signal in response to power control messages received from the power receiver (105);
detecting communication errors for data messages from the power receiver (105); and
reducing the power level of the drive signal from a current power level to a lower power level in response to the detector (315) detecting a communication error.
